(19) Europäisches Patentamt

European Patent Office

Office européen des brevets

(11) EP 0 957 072 A2

(12) **EUROPÄISCHE PATENTANMELDUNG**

(43) Veröffentlichungstag:
17.11.1999 Patentblatt 1999/46

(51) Int. Cl.⁶: **C05F 9/04**, C05G 1/00

(21) Anmeldenummer: 99103246.7

(22) Anmeldetag: 19.02.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 13.05.1998 DE 19821427

(71) Anmelder:
Heinze, Gerald, Prof. Dr.
49577 Kettenkamp (DE)

(72) Erfinder:
Heinze, Gerald, Prof. Dr.
49577 Kettenkamp (DE)

(54) **Dünger aus organischen und anorganischen Substanzen mit hohem Ausnutzungsgrad der darin enthaltenen Pflanzennährstoffe**

(57) Die Erfindung beschreibt einen Dünger aus einer agglomerierten Mischung aus Kompost und mineralischen und organischen Düngern, dessen Nährstoffinhalte beim Düngen von Kulturpflanzen zu 100% von diesen Pflanzen ausgenutzt werden. Der in der Düngertechnologie bekannte Ausnutzungsgrad der Nährstoffe liegt bei mindestens 100%.

Der erfindungsgemäße Dünger ist ein umweltfreundlicher Dünger, weil er keine Nährstoffe ungenutzt in die Umweltmedien Waser, Luft und Boden abgibt.

Im Vergleich zu den herkömmlichen Düngern werden bei Verwendung des erfindungsgemäßen Düngers beispielsweise nur 50% Stickstoff (N) auf einer Ackerfläche benötigt, um den gleichen Ertrag zu erzielen wie bei Verwendung des herkömmlichen mineralischen Düngers.

Printed by Xerox (UK) Business Services
2.16.7/3.6

**Beschreibung**

Die Erfindung betrifft einen Dünger aus organischen und mineralischen Substanzen, deren Nährstoffinhalte vollständig ausgenutzt werden. Unter Ausnutzungsgrad ist zu verstehen: Das Verhältnis des Gesamtentzuges eines bestimmten Nährstoffes durch die Pflanzen abzüglich des Entzuges aus dem Bodenvorrat zur Nährstoffmenge des Düngers; ausgedrückt in Prozent. Als Formel:

$$\text{Ausnutzungsgrad (in\%)} = \frac{\text{Gesamtentzug - Entzug aus dem Boden}}{\text{Nährstoffmenge des Düngers}} \times 100 \qquad (1)$$

Die Werte der Entzüge werden durch einen Versuch ermittelt mit gedüngten Pflanzen (Parzelle 1) und ungedüngten Pflanzen (Parzelle 2), die ihre Nährstoffe dem Boden entziehen. Dieses Vorgehen wird als Differenzmethode bezeichnet.

Die Pflanzen nehmen Nährstoffe auf, wie Stickstoff, Phosphat und Kali, die sie dem Boden entziehen. Zur Bestimmung der Menge an Dünger muß man die Entzugswerte der jeweils zu düngenden Pflanze kennen. Diese Kenntnis kann durch Messungen oder durch Erfahrungen gewonnen werden.

Die auf die Felder gebrachten Düngemährstoffe, werden von den zu düngenden Pflanzen aufgenommen oder werden festgelegt oder gehen verloren. Diejenigen Düngernährstoffe, die in pflanzenverfügbarer Form vorliegen, werden von den Pflanzen bei Bedarf in der entsprechenden Menge aufgenommen. Nicht alle in der verfügbaren Form vorliegenden Nährstoffe werden von den Pflanzen aufgenommen; sie verbleiben zunächst im Boden. Andere Nährstoffe werden festgelegt und sind für einige Zeit nicht verfügbar. Und schließlich wandern Nährstoffe in tiefere Schichten ab, gehen aus dem Wurzelraum hinaus und sind für die Pflanzen ebenfalls nicht mehr verfügbar.

Unter starker Beteiligung der Mikroorganismen finden laufend Vorgänge statt, die die Bindungsform der Nährstoffe ändern und diese im gewissen Umfang wieder verfügbar machen. Diese Mobilisierung und Immobilisierung, die Nachlieferung und die Festlegung von Nährstoffen, wird als Nährstoffdynamik bezeichnet. Um den Ausnutzungsgrad der Nährstoffe zu verbessern, muß wie folgt in die Nährstoffdynamik des Bodens positiv eingegriffen werden:

viele Nährstoffe müssen in lockerer Form gespeichert werden,
die Nährstoffe müssen vor Auswaschungen geschützt werden,
Überschüsse an Nährstoffen müssen durch Immobilisierung abgepuffert, ohne fixiert zu werden,
Nährstoffe müssen beim Bedarf der Pflanzen mobilisiert werden, wenn sie durch Entzug oder anders verloren gehen.

Es wurde nun gefunden, daß die Nährstoffdynamik einerseits und der Ausnutzungsgrad andererseits optimiert werden können. Nach der Erfindung werden Kompost und Mineraldünger in einem bestimmten Verhältnis gemischt und agglomeriert.

Das Verhältnis Kompost (Humus) zu Mineraldünger muß erfindungsgemäß so gewählt werden, daß der Ausnutzungsgrad 100% beträgt, wie nachfolgend noch beschrieben und erläutert wird.

Die auf die Ackerfläche ausgebrachte Düngermenge muß *bei gleichen Erträgen* voll genutzt werden. Zur Erreichung dieser Wirkung werden beispielsweise 75% Humus und 25% mineralischer Stickstoffdünger gemischt und agglomeriert. Das Agglomerieren kann mit Hilfe der Rollgranulation oder der Preßagglomeration geschehen. Erfindungsgemäß wird durch die Agglomeration erreicht, daß der mineralische Dünger allseitig von Humus (Kompost) umgeben ist. Deshalb darf der Anteil an mineralischem Dünger einen Grenzwert nicht überschreiten. Der Anteil an mineralischem Dünger liegt im allgemeinen zwischen 10 - 30%, so daß eine Einbindung in Humus (Qualitätskompost) gewährleistet ist. Der erwähnte Grenzwert wurde mit 30% ermittelt und ist ein wesentlicher Bestandteil dieser Erfindung. Mit anderen Worten: Der Kompostanteil in dem erfindungsgemäßen Dünger muß mindestens 70% betragen oder anders ausgedrückt: der Anteil an mineralischen Dünger darf 30% nicht übersteigen. Alle Prozentsätze beziehen sich auf Gewichtsprozente.

Für die oben genannte Formel zur Ermittlung des Ausnutzungsgrades ein Beispiel:

Gesamtentzug aus dem Dünger und Bodenvorrat:    90 kg N/ha
Entzug aus dem Bodenvorrat (ohne Düngung):    30 kg N/ha
Düngernährstoff:    115 kg N/ha

$$\text{Ausnutzungsgrad} \ = \ \frac{90 - 30}{115} \ \text{x} \ 100 = 52\% \qquad (2)$$

Für die Fälle erfindungsgemäßer hoher Ausnutzungsgrade zwei Beispiele:

Gesamtentzug aus dem Dünger und dem Bodenvorrat: 90 kg N/ha
Entzug aus dem Bodenvorrat (ohne Düngung): 30 kg N/ha
Düngermenge für Beispiel 1: 70 kg N/ha
Düngermenge für Beispiel 2: 55 kg N/ ha

Ausnutzungsgrade A1 und A2:

$$A1 \ = \ \frac{90 - 30}{70} \ \text{x} \ 100 \ = 86\% \ \text{und} \ A2 \ = \ \frac{90 - 30}{55} \ \text{x} \ 100 = 109 \ \% \qquad (3)$$

Wenn die Düngermenge weniger als 60 kg N/ha beträgt, dann ergibt sich rechnerisch ein Prozentsatz über 100, der als Ausnutzungsgrad für einen Dünger nicht realistisch ist. So wie ein Meßbecher nur zu 100% bis zum Rand gefüllt sein kann und nicht zu 110% über den Rand hinaus.
Realistisch ist nur die Feststellung, daß sich der Entzug aus dem Bodenvorrat durch den erfindungsgemäßen Dünger verändern muß; er muß höher werden, wenn man von den Erfahrungswerten und Faustregeln der Düngung für bestimmte Ackerschläge und Fruchtarten ausgeht. Jede Pflanze braucht bestimmte Mengen an Nährstoffen.
Zur Ermittlung des Ausnutzungsgrades wird die Differenzmethode benutzt. Bei der Differenzmethode wird die Nährstoffaufnahme der Pflanzen aus gedüngten und ungedüngten Parzellen verglichen. Die aus diesen Ergebnissen gezogene Schlußfolgerung geht davon aus, daß durch die Düngung der einen Parzelle die Aufnahme der Bodennährstoffe nicht verändert wird. Das ist eine Annahme, die einer streng wissenschaftlichen Betrachtung nicht standhält.
Bei der Erfassung der Wirkung des erfindungsgemäßen Düngers wurde pragmatisch und empirisch vorgegangen. Im Mittelpunkt der Messungen stehen die Erträge und die jeweilige Nährstoffmenge zweier nebeneinander liegender Parzellen.
Zu jeder Düngung gehören Erträge. Eine Verbesserung des Ausnutzungsgrades muß nicht mit der Erzielung höherer Erträge verbunden sein, sondern sollte eine Einsparung an Düngemittel *bei sonst gleichem Ertrag* sein, verglichen mit dem Ertrag beim Einsatz einer weitaus höheren Menge an Dünger. Eine Parzelle (Parzelle 1) wurde mit mineralischem Dünger gedüngt in der Menge, die den Erfahrungen des Landwirtes entsprach; die zweite, gleichgroße Parzelle (Parzelle 2) mit dem erfindungsgemäßen Dünger, der wesentlich weniger Nährstoffe enthielt.
Für die Ermittlung des Nährstoffbedarfs gibt es eine Reihe von Möglichkeiten: von den groben Anhaltswerten bis hin zu den wissenschaftlichen Untersuchungen. Als Diagnose-Methoden sind bekannt: erstens die Untersuchungen der Böden auf verfügbare Nährstoffe, zweitens die Untersuchung der Pflanzen und drittens die Ableitung des Nährstoffbedarfs aus Erfahrung.
Man hat für den dritten Fall der Ableitung des Nährstoffbedarfs aus Erfahrung lokale Richtwerte, sogenannte Faustzahlen. Die Faustzahlen umfassen den tatsächlichen Nährstoffentzug durch die Pflanzen sowie die Verluste an dem Dünger, der in tiefere Schichten wandert. Als Ergebnis resultiert ein geringer Ausnutzungsgrad. Nach SCHEFFER (Stickstoff und Boden, Stickstoff und Pflanze. In: Stickstoff. Fachverband Stickstoffindustrie, Düsseldorf 1961) beträgt die wirkliche Ausnutzung des Stickstoffs aus Stickstoffdüngern im ersten Jahr nach den Düngung:

Stickstoff, mineralisch:     Ausnutzungsgrad 50 - 60%
Stickstoff, organisch:       Ausnutzungsgrad 20 - 30%

Für den erfindungsgemäßen Dünger wird die Formel

$$\text{Ausnutzungsgrad (\%)} = \frac{\text{Gesamtentzug - Entzug aus dem Boden}}{\text{Nährstoffmenge des Düngers}} \times 100 \quad (1)$$

neu gefaßt. Der Ausnutzungsgrad für die herkömmliche Art zu düngen liegt unter 100%, im allgemeinen bei 50 - 60% für mineralischen Dünger.

$$\text{Der Entzug aus dem Boden } (E_B) = \text{Gesamtentzug } (G_E) - \text{Dünger } (D) \quad (4)$$

Zur Ermittlung des Ausnutzungsgrades des erfindungsgemäßen Düngers wurden zwei nebeneinander liegende Parzellen gebildet, in der Regel jeweils etwa 10 Hektar umfassend. Gemessen wurden von beiden Parzellen:

1. Erträge
2. Düngernährstoff Stickstoff (N)
3. Bodennährstoff Stickstoff, als der zu Beginn der Vegetationszeit vorhandene Vorrat an mineralischem Stickstoff, bezeichnet als $(N_{min})$.

Bei Verwendung des erfindungsgemäßen Düngers beträgt der Ausnutzungsgrad 100% oder über 100%. Die Formel für den 100%ige Ausnutzung des erfindungsgemäßen Düngers $(D_E)$ könnte so umgeformt werden:

$$\text{Ausnutzungsgrad } 100 \, (100\%) = \frac{\text{Gesamtentzug } (G_E) - (G_E - E_B)}{D_E} \times 100 \quad (4)$$

Beispiel:

$G_E = 90$ kg N pro Hektar
$E_B = 55$ kg N pro Hektar
$D = 115$ kg N pro Hektar x 0.48 (Erfahrungsfaktor $E_F$) = 55 kg N pro Hektar
$D_E = 55$ kg N pro Hektar

$$A \, 100 = \frac{90 - (90 - 55)}{55} \times 100 \quad (5)$$

Der Ausnutzungsgrad beträgt 100%.

Für die Landwirtschaft ist es wichtig, im voraus zu wissen, wieviel von dem erfindungsgemäßen Dünger $(D_E)$ einzusetzen ist, um den gleichen Ertag zu erhalten wie bei der bisherigen, konventionell auf Erfahrung beruhenden Düngung mit mineralischem Dünger.

Im Beispiel nach Formel (2) sind zur Düngung 115 kg N/ha aufgebracht worden. Über die zuvor beschriebene Differenzmethode wurde als Ausnutzungsgard 52% ermittelt. Außerdem liegen als Ergebnis der Differenzmethode die Werte für den Gesamtentzug aus dem Boden $E_B$ vor.

Da nicht stets die Differenzmethode in der Praxis der Düngung vorausgehen kann, muß auch für den erfindungsgemäßen Dünger $D_E$ eine Ableitung aus Erfahrung benutzt werden.

Die durch Versuche belegten Erfahrungen mit dem erfindungsgemäßen Dünger lehren, daß mit Faktoren $E_F$ zwischen 0.3 -0.5 die Düngermengen $D_E$ aus der bisher verwendeten Düngermenge, bestehend aus mineralischem Dünger, zu verwenden sind, um den Ausnutzungsgard 100 zu erreichen.

Nach den Erfahrungen und Versuchsergebnissen mit dem erfindungsgemäßen Dünger kann der Ausnutzungsgrad über 100% liegen, wenn die Düngergaben zu hoch sind; wie im Beisoiel 3, A2.

Da ein Dünger zwar zu 100% ausgenutzt werden kann, aber nicht zu 109% müssen die über 100% liegenden 9% aus einer anderen Quelle kommen, nämlich aus dem Boden; insbesondere durch eine vermehrte Tätigkeit der Bodenlebewesen.

Im Boden bis zu einer Tiefe von 20 cm ist ein Vorrat an Stickstoff (N) von 900 - 9.000 kg/ha; berechnet aus dem N-Gehalt vieler Böden von 0.3 - 3 ‰. Davon sind etwa 95% in der organischen Substanz zu finden. Da die Mineralisierungsrate durch Humusabbau pro Jahr 1 - 3% beträgt, ergibt sich eine N-Menge im Boden von 10 - 300 kg/ha, davon sind 3 - 100 kg/ha für die Pflanzen nutzbar.

Die Pflanzen decken ihren N-Bedarf im allgemeinen aus dem bodeneigenen Stickstoff als natürliche Anlieferung und aus der anthropogenen N-Lieferung durch Düngung.

Für die Stickstoffdüngung gibt es Richtwerte, angegeben von der Bayerischen Landesanstalt für Bodenkultur und Pflanzenbau und von den Autoren H.S. Grunwaldt und W. Patzke (Düngebedarfsermittlung nach Bodenuntersuchungsergebnissen. Landwirtschaftskammer Schleswig-Holstein. Kiel 1975).

Tabelle 1

| Richtwerte für die mineralische und organische N-Düngung | | |
|---|---|---|
| Fruchtart | Norddeutschland kg N/ha | Süddeutschland kg N/ha |
| Winterweizen | 120 - 160 | 80 - 180 |
| Sommerweizen | 100 - 140 | 80 - 180 |
| Wintergerste | 100 - 140 | 80 - 150 |
| Sommergerste | 80 - 100 | 20 - 80 |
| Winterroggen | 80 - 120 | 60 - 120 |
| Hafer | 80 - 100 | 60 - 120 |
| Silomais | 180 - 240 | 120 - 180 |
| Abgesehen von den Extremwerten liegt die N-Düngermenge zwischen 80 - 180 kg/ha. | | |

Die Formel (1) läßt sich verkürzt so darstellen:

**1. Bezogen auf die herkömmliche Art zu düngen**

$$A_W = \frac{G_E - E_B}{D} \quad (6)$$

**2. Bezogen auf die Düngung mit erfindungsgemäßem Dünger**

$$A_W = \frac{G_E - E_B}{D_E} \quad (7)$$

Anstelle von A ist das Symbol $A_W$ eingesetzt. Anstelle des Ausnutzungsgrades steht jetzt der Ausnutzungswert $A_W$.

Wenn der Ausnutzungsgrad für die Beziehung steht: Gesamtentzug an Nährstoffen minus Entzug aus dem Bodenvorrat zur Nährstoffmenge des zugeführten Düngers, dann dürfte bei einem Ausnutzungsgard von 100% nur die Menge an Nährstoffen zu gegeben werden, die die Pflanzen entziehen.

Als perfekter N-Dünger könnte derjenige bezeichnet werden, der gemeinsam mit dem Bodenvorrat nur den Entzug an Stickstoff durch die Pflanze wieder ersetzt und darüber hinaus keinen zusätzlichen Stickstoff einbringt. Das bedeutet, daß der Ausnutzungswert bei 1 oder der Ausnutzungsgrad bei 100% liegt, so wie er als Ergebnis des Beispiels (5) vorliegt.

Der erfindungsgemäße Dünger entspricht diesem Anspruch.

In allen Experimenten konnte ein Ausnutzungsgrad von ≥100 oder ein Ausnutzungswert ≥1 errechnet werden, wobei die Ertragswerte der daneben liegenden Versuchsparzelle gleich oder sogar besser waren bei Verwendung des erfindungsgemäßen Düngers.

Die volle, 100%ige Ausnutzung des aufgebrachten Düngers löst das Problem der Überdüngung, die zu Umweltschäden führen kann. Es sei die Euthrophierung der Gewässer genannt. In Gewässern nehmen durch die Düngung mit einem Ausnutzungsgrad deutlich unter 100 die unerwünschten Nährstoffe zu.. Es kommt zu verheerendem Wuchern bestimmter Pflanzen und Kleintierarten; z.B. Algen in der Nordsee.

Hinzu kommt die Stickstoffbelastungen, die über den sogenannten Stickstoffkreislauf zwischen Boden, Wasser und Luft miteinander verbunden sind.
Die anthropogenen Einflüße auf den natürlichen Stickstoffkreislauf sind inzwischen so stark geworden, daß die Stickstoffverbindungen nicht mehr nur als lebensnotwendige Nährstoffe für Menschen, Tiere und Pflanzen vorhanden sind, sondern mit steigendem Ausmaß als Schadstoffe in der Biosphäre auftreten.

Aus der Landwirtschaft stammen die atmosphärischen Emissionen Ammoniak ($NH_3$) und Distickstoffoxid ($N_2O$). Nitrat ($NO_3^-$) belastet die Hydrosphäre.
Nach den Angaben der Bundesforschungsanstalt für Landwirtschaft (FAL) in Braunschweig - Völkenrode werden in Deutschland rund 1.612.000 t Stickstoff (N) durch mineralische N-Düngemittel pro Jahr in der Landwirtschaft eingesetzt.

Nach den vorausgegangenen Ausführungen (SCHEFFER) kann ein Ausnutzungsgrad von durchschnittlich 55% angenommen werden. Der erfindungsgemäße Dünger hat einen Ausnutzungsgrad von 100%. Das bedeutet, daß rechnerisch 1.612.000 - ( 1.612.000 x 0.45) = 725.400 t Stickstoff (N) pro Jahr „überflüssig" sind und eingespart werden könnten. Sie würden nicht als Schadstoffe in die Biosphäre gelangen. Der ökonomische Vorteil des erfindungsgemäßen Düngers liegt auf der Hand. Es sei zusätzlich bemerkt, daß für die Herstellung von 1 kg mineralischen Düngers 1 kg Öl benötigt werden. Das kommt einer jährlichen Energieeinsparung von 725.400 t Öl gleich.

**Patentansprüche**

1. Dünger für Kulturpflanzen, insbesondere im landwirtschaftlichen Bereich, bestehend aus einer agglomerierten Mischung aus Kompost (Humus) und mineralischem oder organischen Dünger, bei dem der Ausnutzungsgrad der Nährstoffe bei mindestens 100% liegt.

2. Dünger nach Anspruch 1, dadurch gekennzeichnet, daß der Anteil an Kompost mindestens 70% (Gewichtsprozente) beträgt.

3. Dünger nach den Ansprüchen 1 und 2, dadurch gekennzeichnet, daß die Agglomeration vorzugsweise durch Preß- oder Rollagglomeration, so erfolgt, daß der mineralische Düngeranteil vollständig vom Kompost (Humus) umgeben ist.

4. Dünger nach einem der vorhergehenden Ansprüche, dadurch gekennzeichnet, daß der in der Mischung verwendete Kompost hergestellt wird aus Wirtschaftsdünger, Bioabfall, Siedlungsabfall, Grünabfall und/oder anderen organischen Substanzen, die keine bodenunverträglichen Stoffe enthalten.

5. Dünger nach einem der vorhergehenden Ansprüche, dadurch gekennzeichnet, daß übliche organische Dünger wie Guano, Tiermehl oder Hornmehl verwendet werden.

6. Dünger nach einem der vorhergehenden Ansprüche, dadurch gekennzeichnet, daß als mineralische Dünger übliche Düngemitteln wie Kalkammonsalpeter, Superphosphat oder Kornkali verwendet werden.